# EUROPÄISCHE PATENTSCHRIFT

(11) **EP 3 409 620 B1**
(45) Veröffentlichungstag und Bekanntmachung des Hinweises auf die Patenterteilung: **12.07.2023**
(21) Anmeldenummer: 18174073.9
(22) Anmeldetag: 24.05.2018
(51) Int. Cl.: B65G 21/08

(54) **FÖRDERBANDANLAGE UND SYSTEM ZUM ÜBERWACHEN VON ROLLEN DER FÖRDERBANDANLAGE**
CONVEYOR BELT INSTALLATION AND SYSTEM FOR MONITORING ROLLERS OF THE CONVEYOR BELT INSTALLATION
INSTALLATION DE BANDE TRANSPORTEUSE ET SYSTÈME DE SURVEILLANCE DE ROULEAU DE L'INSTALLATION DE BANDE TRANSPORTEUSE

(30) Priorität: 01.06.2017 DE 102017209310
(43) Veröffentlichungstag der Anmeldung: 05.12.2018
(73) Patentinhaber: Takraf GmbH, 04347 Leipzig (DE)
(72) Erfinder: NOWAK, Jan, 04249 Leipzig (DE); DILEFELD, Dr. Mario, 04319 Leipzig (DE); KAHRGER, Rainer, 04105 Leipzig (DE)
(74) Vertreter: Kailuweit & Uhlemann Patentanwälte Partnerschaft mbB

(56) Entgegenhaltungen:
- WO-A1-2017/012984
- CN-A- 107 720 112
- DE-A1- 2 911 186
- DE-A1- 3 510 802
- FR-A- 1 520 477
- KR-B1- 101 764 066
- KR-B1- 101 773 866
- US-A1- 2012 186 613

## Beschreibung

Die vorliegende Erfindung betrifft eine Förderbandanlage mit einem umlaufenden Förderband, wobei ein beladbarer Förderbandabschnitt auf oberen Rollen und ein unbeladener Förderbandabschnitt auf unteren Rollen aufliegt, und mit einer sich entlang der Längsachse der Förderbandanlage erstreckenden Einhausung. Die Erfindung betrifft auch ein System zum Überwachen von Rollen in dieser Förderbandanlage.

Derartige Förderbandanlagen kommen beispielsweise in Tagebauen zum Einsatz, um geförderte Rohstoffe über hunderte Meter lange Strecken zu Beladestationen zu transportieren. Die Förderbandanlagen verfügen regelmäßig über Einhausungen, welche das Wegblasen von Staub von dem Förderband und die Befeuchtung des transportierten Schüttgutes durch Regen verhindern. Die Einhausung ist auch aus Sicherheitsgründen erforderlich, um Personen und Tiere vor Verletzungen an bewegten Teilen der Förderbandanlage zu schützen.

Die Förderbandanlagen verfügen über eine Vielzahl von gelagerten Rollen mit einer begrenzten Lebensdauer. Defekte Lager können zur Beschädigung des Förderbandes führen. Durch Reibung an schwergängigen Lagern und durch die Reibung des Förderbandes an einer sich nicht ausreichend schnell drehenden Rolle entsteht Wärme. Dabei können hohe Temperaturen entstehen, von denen auch eine Brandgefahr durch Entzündung von Schmierstoffen oder des Förderbandes ausgeht. Zur Vermeidung von Schäden werden Förderbandanlagen turnusmäßig überprüft und verschlissene Rollen werden rechtzeitig gewechselt, bevor sie ausfallen. Verschlissene Rollen können auf verschiedene Weise erkannt werden, beispielsweise akustisch anhand sich erhöhender Laufgeräusche oder optisch mit Infrarotthermometern oder Wärmebildkameras.

Aus DE 203 19 532 U1 sind Einhausungen in Form von bogenförmigen Wellblech- Tunneln bekannt. Diese Einhausungen verfügen in periodischen Abständen über anhebbare Klappen, durch welche ein Kontrollieren der Förderbandanlage vorgesehen ist. Die Einhausung der Förderbandanlage erschwert die Kontrolle der Rollen, weil immer zunächst die Klappen oder Türen geöffnet werden müssen. Rollen, die nicht unmittelbar vor der offenen Tür angeordnet sind, können schlechter kontrolliert werden und es besteht deshalb die Gefahr, dass kleinere Beschädigungen unerkannt bleiben. Die DE 36 22 702 C2 beschreibt tunnelförmige Förderbandabdeckungen, die Segmente von Abdeckplanen aufweisen. Diese Planen-Segmente schließen seitlich aneinander an, sodass im Wesentlichen alle Stellen an der Seite eines Förderbandes nach dem Öffnen der Abdeckplanen sukzessiv inspiziert werden können. Auch bei dieser Art von Einhausungen ist das Öffnen derselben zum Zwecke der Inspektion aufwendig.

Ein Nachteil von flexiblen Planen ist deren begrenzte Beständigkeit gegenüber ultraviolettem Licht bei intensiver Sonnenbestrahlung und eine daraus resultierende begrenzte Lebensdauer der Planen.

Aus der FR 1 520 477 A ist eine Förderbandanlage mit einer Einhausung bekannt, die aus Spannbetonelementen besteht, die einen Kanal bilden, wo der Förderbandbabschnitt sich befindet. Die Einhausung weist eine obere Plattform auf, die einteilig mit den Seitenwänden und dem Boden der Einhausung ausgebildet ist und die den Förderbandabschnitt trägt. Zur Inspektion weisen die Betonelemente Bullaugen auf, die auf beiden Seiten der Betonelemente in Höhe des Förderbandes angeordnet sind. Die FR 1 520 477 A offenbart eine Förderbandanlage gemäß dem Oberbegriff des Anspruchs 1.

Aus der KR°101°773°866°B1 ist ein Kettenbandförderer bekannt, dieser soll das Fördergut von der Umwelt hermetisch abschließen, damit Staub und Geruch nicht nach draußen dringen. Auf Grund der Abschließung des Förderers ist es nötig im Havarie Fall über Inspektionsklappen das Innere zu begutachten. Die CN°107°720°112°A schlägt eine Schutzvorrichtung für Förderer vor, deren Neigung größer 25° ist, die bei dieser Neigung herumfliegenden Fördergüter sollen wirksam zurückgehalten werden und der Mensch geschützt werden.

Nachteilig am Stand der Technik sind, die nicht vorhandenen Möglichkeiten der Inspektion während des Betriebes, weiterhin nachteilig sind die aufwendigen Konstruktionen aus Blech oder Metall, die verschraubt sind und für eine Inspektion abgenommen werden müssen Diese aufwendigen Konstruktionen stellen lokale Einschränkungen für die Inspektion dar, weil diese regelmäßigen tragenden Elemente im Inspektionsbereich aufweisen. Diese lokalen Einschränkungen lassen zudem keine direkte Tragrollendiagnose ohne Berührungsschutz im Betrieb zu.

Die Aufgabe der vorliegenden Erfindung besteht darin, eine Förderbandanlage vorzuschlagen, bei der fehlerhafte Rollen einfach festgestellt werden können. Zur Aufgabe der Erfindung gehört auch, ein System zum Überwachen von Rollen einer Förderbandanlage vorzuschlagen, das die beschriebenen Nachteile aus dem Stand der Technik überwindet.

Die Aufgabe der Erfindung wird durch eine Förderbandanlage gemäß Anspruch 1 gelöst.

Diese Einhausungen müssen zum Durchführen der Kontrollen der Rollen nicht großflächig geöffnet werden. Stattdessen werden die Rollen durch Diagnosefenster inspiziert. In einigen Ausgestaltungen der Erfindung bleiben die Fenster für die Inspektion geschlossen und die Inspektion erfolgt durch die geschlossenen Diagnosefenster hindurch. In anderen Ausgestaltungen der Erfindung werden nur die relativ kleinen Diagnosefenster zum Durchführen der Kontrollen geöffnet. Das Kontrollieren kann basierend auf den menschlichen Sinnen, z.B. durch Anhören der Laufgeräusche oder durch Fühlen von Gehäusetemperaturen erfolgen. Ergänzend oder ersatzweise können auch Messgeräte zum Einsatz kommen, beispielsweise Mikrofone mit nachgeschalteter Signalanalyse, Infrarotthermometer oder Wärmebildkameras. Mit Messgeräten wird teilweise eine größere Präzision erreicht, außerdem können durchgeführte Diagnosen einfacher protokolliert und weiterverarbeitet werden. Die Schallwellen, die Wärmestrahlen oder andere Signalträger, die eine Information über den Zustand der Rollen tragen, sind unter dem Begriff Diagnosesignal zusammengefasst.

Die Förderbänder sind üblicherweise Endlosbänder, die zwischen zwei Kopftrommeln aufgespannt sind und zwischen den Kopftrommeln durch angetriebene oder nicht angetriebene Rollen abgestützt sind. Die oberen Rollen tragen sowohl die Last des Förderbandes als auch das darauf transportierte Fördergut. Die unteren Rollen tragen hingegen nur das Förderband und verhindern ein Durchhängen desselben.

Die erfindungsgemäße Förderbandanlage weist auf einer Seite des Förderbandes zwei übereinander angeordnete Diagnosefenster auf, wobei untere Diagnosefenster eine Diagnose der unteren Rollen erlauben und obere Diagnosefenster entsprechend ein Kontrollieren der oberen Rollen. Beide Seiten der Förderbandanlage können mit Diagnosefenstern ausgestattet sein, sodass die Rollen über kurze Distanzen vorzugsweise bei laufendem Betrieb der Förderbandanlage kontrolliert werden können.

Durch die Aneinanderreihung der einzelnen Diagnosefenster sind alle Rollen gleichermaßen gut für die Kontrolle zugänglich. Die Reihe erstreckt sich entlang der Förderbandanlage und ermöglicht sowohl einen Blick auf die oberen Rollen als auch auf die unteren Rollen. Die Förderbandanlage weist auch zwei oder mehr als zwei Reihen von Diagnosefenstern auf einer oder auf beiden Seiten auf. Die Diagnosefenster sind für eine optische und/oder akustische Überprüfung der Rollen und Ihren Lagern bei geschlossener Einhausung ausgebildet. Die Fenster können also transparent für das

Messsignal bzw. das Diagnosesignal sein, beispielsweise für Schallwellen oder für Infrarotstrahlung bzw. Wärmestrahlung, die von Befestigungsteilen der Rollen ausgesendet wird. In einem Ausführungsbeispiel weist das Diagnosefenster jeweils ein in einen Fensterrahmen eingespanntes Gitterelement auf, wobei das Gitterelement schalldurchlässig ist und/oder auseichend große Öffnungen aufweist, um mit einem Infrarotthermometer oder mit einer Wärmebildkamera durch das Gitterelement hindurch eine Temperaturmessung an den Rollen durchführen zu können. Das Gitterelement bietet einerseits einen ausreichenden Schutz vor Verletzungen an bewegten Teilen der Förderbandanlage, andererseits kann das Gitterelement derartig mit Öffnungen zwischen den Gitterstäben ausgestattet sein, dass durch die Öffnungen hindurch eine Kontrolle der Rollen möglich ist. Das Gitterelement hat zwar eine größere Durchlässigkeit für Staub als ein geschlossenes Verkleidungselement. Wegen einer Anordnung des Gitterelements unterhalb des Förderbandes besteht trotzdem ein guter Staubschutz, da das Fördergut kaum durch Wind aufgewirbelt wird.

Gemäß einer Ausgestaltung der erfindungsgemäßen Förderbandanlage weist die Einhausung untere Diagnosefenster, obere Diagnosefenster und Abdeckhauben auf, wobei die unteren Diagnosefenster seitlich neben den unteren Rollen angeordnet sind, die oberen Diagnosefenster seitlich neben den oberen Rollen angeordnet sind, und die Abdeckhauben auf den oberen Diagnosefenstern angeordnet sind. Diese Einhausungen verwendet relativ kleinteilige und damit leichte, von wenig Wartungspersonal handhabbare Komponenten. Die oberen Diagnosefenster werden dabei effektiv nicht nur zur seitlichen Verkleidung der Förderbandanlage, sondern zusätzlich als tragende Teile für die darauf angeordneten Abdeckhauben genutzt. Durch einen insgesamt geringen Materialaufwand kann eine solche Einhausung kostengünstig gefertigt werden. Bei diesen Einhausungen können die oberen Diagnosefenster eine Länge haben, die dem Abstand von oberen Tragrollenstühlen der Förderbandanlage entspricht und die unteren Diagnosefenster können eine Länge haben, die dem Abstand s der Abstützung der Förderbandanlage entspricht. Somit können in der Förderbandanlage vorhandene tragende Teile zusätzlich zur Befestigung der Diagnosefenster genutzt werden. Die Tragrollenstühle und die Abstützung der Förderbandanlage werden dabei zu Teilen der Einhausung, sodass die übrigen Teile der Einhausung leicht gebaut sein können. Die oberen Diagnosefenster können zum Abstützen der Abdeckhauben ausgebildet sein und die Abdeckhauben können eine geringere Länge als die oberen Diagnosefenster haben. Beispielsweise kann die Länge der Abdeckhauben die Hälfte von der Länge der oberen Diagnosefenster betragen, sodass das obere Diagnosefenster als Abstützung für zwei nebeneinander angeordnete Abdeckhauben dient. Die Abdeckhauben geringer Länge sind handhabungsfreundlich und können beispielsweise von zwei Personen angehoben werden. Die oberen Diagnosefenster können an die oberen Tragrollenstühle angelehnt, die Abdeckhauben auf die oberen Diagnosefenster aufgestellt werden und die oberen Diagnosefenster und die Abdeckhauben können mit Spannseilen an den oberen Tragrollenstühlen verspannt sein, wobei Griffe der oberen Diagnosefenster und der Abdeckhauben auch der Führung der Spannseile dienen. Die Abdeckhauben können also mit einfachen und entsprechend kostengünstigen Mitteln zusammengesetzt werden. Zusätzlich oder alternativ können weitere Montagehilfen, beispielsweise Führungslaschen, Loch-Stift-Paarungen, Nut-Feder-Verbindungen und oder Rastelemente enthalten sein.

Die Abdeckhauben können so geformt oder flexibel ausgebildet sein, dass sie auf andere Abdeckhauben stapelbar sind. Die Abdeckhauben können also eine Form mit nach unten sich erweiternder Öffnungsbreite haben, sodass mehrere Abdeckhauben aufeinander stapelbar sind. Die Abdeckhauben können aber auch im montierten Zustand senkrechte Seitenwände und eine solche Flexibilität haben, dass durch eine elastische Verwölbung der Abdeckhauben ein Stapeln trotz gleicher Auslegungs-Abmessungen möglich ist.

Die Stapelbarkeit ist nicht nur für die Erstlieferung der Förderbandanlage vorteilhaft, sondern auch für Wartungsarbeiten. So können abgenommene Abdeckhauben raumökonomisch auf benachbarten Abdeckhauben zwischengelagert werden.

Das Diagnosefenster kann statt eines Gitterelements eine von einem Fensterrahmen aufgenommene Folie aufweisen. Die Folie oder Plane kann so dünn sein, dass durch sie hindurch eine Messung beispielsweise eine akustische Messung möglich ist. Es kann aber auch eine einseitige Befestigung der Folie und ein Wegklappen derselben für Diagnosezwecke vorgesehen sein. Die Fenster können auch eine steife Füllung aufweisen. Öffenbare Diagnosefenster können Scharniere oder Schiebemechanismen aufweisen. Zum Schutz gegen unbefugtes Öffnen können Schlösser und dergleichen vorgesehen sein.

In der erfindungsgemäßen Förderbandanlage können beidseitig des Förderbandes Diagnosefenster angeordnet und die Diagnosefenster können in einer Höhe montiert sein, die im Wesentlichen der Montagehöhe der Rollen entspricht. Wenn die Förderbandanlage auf ihren beiden Seiten in Längsrichtung Diagnosefenster aufweist, dann bestehen kurze Distanzen zwischen den zu überprüfenden Rollen und den Diagnosefenstern. An manchen Aufstellorten einer Förderbandanlage ist aber nur eine Seite derselben für Wartungsarbeiten zugänglich. Bei diesen Förderbandanlagen kann eine nur einseitige Ausstattung mit Diagnosefenstern ausreichender Größe für eine Kontrolle aller verbauten Rollen vorgesehen sein.

Die Diagnosefenster können von einer Diagnoseeinheit in einem Diagnoseverfahren öffenbare Verrieglungselemente aufweisen. Für die Kontrolle der Rollen können Diagnoseeinheiten als technische Hilfsmittel bis hin zur vollständig automatischen Lösungen bereitgestellt werden. Solche Hilfsmittel, beispielsweise an der Förderbandanlage entlangfahrbare Servicefahrzeuge können Spezialwerkzeuge zum Zusammenwirken mit entsprechenden Verriegelungselementen an den Diagnosefenstern der Förderbandanlage aufweisen.

Entsprechend wird die Aufgabe der vorliegenden Erfindung auch von einem System zum Überwachen von Rollen in einer erfindungsgemäßen Förderbandanlage mit einer Einhausung der Förderbandanlage gelöst, wobei das System eine erfindungsgemäße Förderbandanlage und weiter eine Diagnoseeinheit mit ein Messgerät zur Erkennung defekter Rollen aufweist und die Diagnoseeinheit zur Überprüfung der Rollen entweder die Diagnosefenster nach einer Entriegelung von Verrieglungselementen öffnen kann oder die Diagnoseeinheit die Rollen durch die geschlossenen Diagnosefenster hindurch überprüfen kann.

Die vorliegende Erfindung und Optionen zur Ausgestaltung derselben wurden in einer knappen Form geschrieben. Die vorliegende Offenbarung umfasst außer den konkret ausformulierten Kombinationen weitere nicht explizit angegebene Merkmalskombinationen im Ermessen des zuständigen Fachmanns. Zufällig nacheinander genannte Merkmalskombinationen dürfen nicht als zwingende Kombination missverstanden werden.

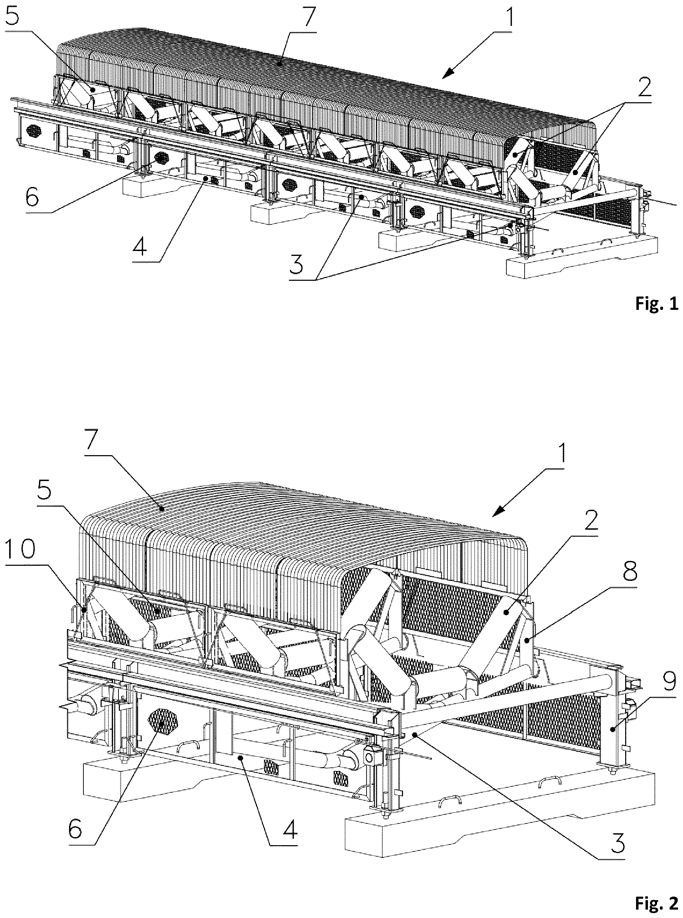

Die vorliegende Erfindung soll im Folgenden anhand von Figuren weiter erläutert werden, wobei Figur 1 eine Förderbandanlage in einer perspektivischen Überblicksansicht und
Figur 2 eine perspektivische Ausschnittsvergrößerung zeigt.

Figur 1 zeigt schematisch eine perspektivische Ansicht eines Ausführungsbeispiels einer erfindungsgemäßen Förderbandanlage 1 in einem Ausschnitt. Das nicht dargestellte endlose Förderband in der Förderbandanlage 1 dient dem Transport eines Schüttgutes, beispielsweise eines Erzes oder von Kohle. Das transportierte Schüttgut liegt auf der Oberseite des Förderbandes auf, wobei das Förderband wannenförmig aufgewölbt ist, um kein Fördergut über die Kanten des Förderbandes zu verlieren. Obere Rollen 2, welche die obere Hälfte des Förderbandes tragen, sind in einem Tragrollenstuhl 8 drehbar befestigt. Dabei ist die dargestellte mittlere obere Rolle 2 horizontal ausgerichtet und die seitlichen oberen Rollen 2 sind zum Rand des Förderbands hin schräg nach oben orientiert. In dem unteren Bereich der Förderbandanlage 1 wird ein leerer Abschnitt des Förderbands bei der Umlaufbewegung des Förderbandes zurückbefördert. Um ein Durchhängen des Förderbandes bei einer großen Förderbandlänge von teilweise mehreren hundert Metern zu vermeiden, wird das Förderband dabei auf unteren Rollen 3 abgestützt.

Die Förderbandanlage 1 ist mit einer Einhausung ausgestattet. Erfindungsgemäß weist dabei die Einhausung Diagnosefenster 4, 5 auf, welche für eine optische und oder akustische Überprüfung der Rollen und ihren Lagern ausgebildet sind. In dem vorliegenden Ausführungsbeispiel weisen sowohl die unteren Diagnosefenster 4, die seitlich neben den unteren Rollen 3 angeordnet sind, als auch die oberen Diagnosefenster 5, die seitlich neben den oberen Rollen 2 angeordnet sind, teilweise offene Gitterelemente 6 auf. Die Gitterelemente 6 bieten einen ausreichenden mechanischen Schutz gegen Verletzungen von Personen oder Tieren an der Förderbandanlage. In den Darstellungen der Figuren 1 und 2 sind die Gitterelemente 6 auf der vorderen Ansichtsseite größtenteils weggeschnitten und nur in kleinen Flächenbereichen dargestellt. Dadurch wird die Transparenz der Diagnosefester 4, 5 für Inspektionen veranschaulicht. In den rückseitigen Diagnosefenstern 4, 5 sind die Gitterelemente 6 hingegen vollflächig eingezeichnet. Nach oben hin wird die Einhausung in dem dargestellten Ausführungsbeispiel von Abdeckhauben 7 komplettiert. Die Abdeckhauben 7 bestehen in dem dargestellten Ausführungsbeispiel größtenteils aus Wellblech. Wie in Figur 1 zu sehen ist, ist der Raum über den oberen Rollen 3 bzw. über dem Förderband im Wesentlichen geschlossen, sodass Regen und Wind weitgehend von dem Transportraum über dem Förderband ferngehalten werden. Abschnitte unterhalb des Förderbandes sind hingegen durch Zumindest für Kontrollen oder Kontrollmessungen weitgehend transparente Diagnosefenster 4, 5 geschlossen. Durch die Diagnosefenster hindurch ist eine akustische und optische Kontrolle der Rollen möglich, ohne dass die Fenster geöffnet oder entfernt werden müssen.

Bei Wartungsarbeiten kann die vorgestellte Einhausung schnell und einfach streckenweise abgebaut werden. Dazu können die Abdeckhauben an ihren Griffen angehoben und auf benachbarten Abdeckhauben zwischengelagert werden. Die Diagnosefenster können von einer oder zwei Personen abgenommen und zur Seite gestellt werden.

Figur 2 zeigt die Förderbandanlage 1 von Figur 1 vergrößert in einem kürzeren Ausschnitt. Außer den bereits im Zusammenhang mit Figur 1 beschriebenen Elementen sind in Figur 2 die Tragrollenstühle 8 besser zu erkennen, an denen hier die oberen Diagnosefenster 5 hinter entsprechenden Führungslaschen angelehnt sind. Die unteren Diagnosefenster 4 sind hingegen an den Abstützungen 9 der Förderbandanlage 1 befestigt. Das obere Diagnosefenster 5 umfasst jeweils einen Fensterrahmen, der gleichzeitig als tragendes Teil für die Montage der Abdeckhauben 7 dient. Die genaue Lage der Abdeckhauben 7 ist durch Führungsstifte sichergestellt, die in entsprechende Löcher in den Diagnosefenstern 5 eingreifen. Die Montagepositionen der oberen Diagnosefenster 5 und der Abdeckhauben 7 werden in dem vorliegenden Ausführungsbeispiel durch Spannseile 10 fixiert, was für die Bewältigung von Windlasten erforderlich ist. Ein Schutz gegen unbefugten Zugriff wird durch nicht dargestellte Schlösser an Spannseilen 10 realisiert. An den Abdeckhauben 7 dienen die Griffe gleichzeitig als Führungen für die Spannseile 10.

Das angegebene Ausführungsbeispiel dient der Erläuterung und nicht der Definition des Schutzbereiches der Erfindung. Der Schutzbereich der Erfindung wird durch die Patentansprüche bestimmt.

### Bezugszeichen

- 1: Förderbandanlage
- 2: obere Rolle
- 3: untere Rolle
- 4: unteres Diagnosefenster
- 5: oberes Diagnosefenster
- 6: Gitterelement
- 7: Abdeckhaube
- 8: Tragrollenstuhl
- 9: Abstützung
- 10: Spannseil

## Patentansprüche

1. Förderbandanlage (1) mit einem umlaufenden Förderband, wobei ein beladbarer Förderbandabschnitt auf oberen Rollen (2) und ein unbeladener Förderbandabschnitt auf unteren Rollen (3) aufliegt, und mit einer sich entlang der Längsachse der Förderbandanlage (1) erstreckenden Einhausung, **dadurch gekennzeichnet, dass** die Einhausung wenigstens auf einer Seite des Förderbandes Diagnosefenster (4, 5) aufweist, wobei die Diagnosefenster (4, 5) auf der Höhe der Rollen (2, 3) des Förderbandes angeordnet und für eine optische und /oder akustische Überprüfung von Lagern der Rollen (2, 3) ausgebildet sind, indem die Diagnosefenster entweder für ein Diagnosesignal transparent oder leicht öffenbar sind und sich die Diagnosefenster (4, 5) entlang einer Reihe erstrecken, und dass die Einhausung untere Diagnosefenster (4), obere Diagnosefenster (5) und Abdeckhauben (7) aufweist, wobei die unteren Diagnosefenster (4) seitlich neben den unteren Rollen (3) angeordnet sind, die oberen Diagnosefenster (5) seitlich neben den oberen Rollen (2) angeordnet sind, und die Abdeckhauben (7) auf den oberen Diagnosefenstern (5) angeordnet sind.

2. Förderbandanlage (1) nach Anspruch 1, **dadurch gekennzeichnet, dass** die Diagnosefenster (4, 5) für eine optische und /oder akustische Überprüfung der Rollen (2, 3) und Ihren Lagern bei geschlossener Einhausung ausgebildet sind.

3. Förderbandanlage nach Anspruch 1, **dadurch gekennzeichnet, dass** das Diagnosefenster jeweils ein in einen Fensterrahmen eingespanntes Gitterelement (6) aufweist, wobei das Gitterelement schalldurchlässig ist und/oder auseichend große Öffnungen aufweist, um mit einem Infrarotthermometer oder mit einer Wärmebildkamera durch das Gitterelement (6) hindurch eine Temperaturmessung an den Rollen (2, 3) durchführen zu können.

4. Förderbandanlage (1) nach Anspruch 1, **dadurch gekennzeichnet, dass** die oberen Diagnosefenster (5) eine Länge haben, die dem Abstand von oberen Tragrollenstühlen (8) der Förderbandanlage entspricht und die unteren Diagnosefenster (4) eine Länge haben, die dem Abstand der Abstützungen (9) der Förderbandanlage (1) entspricht.

5. Förderbandanlage (1) nach Anspruch 4, **dadurch gekennzeichnet, dass** die oberen Diagnosefenster (5) zum Abstützen der Abdeckhauben (7) ausgebildet sind, wobei die Abdeckhauben (7) eine geringere Länge als die oberen Diagnosefenster (5) haben können.

6. Förderbandanlage (1) nach Anspruch 5, **dadurch gekennzeichnet, dass** die oberen Diagnosefenster (5) an die oberen Tragrollenstühle (8) angelehnt, die Abdeckhauben (7) auf die oberen Diagnosefenster (5) aufgestellt sind und die oberen Diagnosefenster (5) und die Abdeckhauben (7) mit Spannseilen (10) an den oberen Tragrollenstühlen (8) verspannt sind, wobei Griffe (11) der oberen Diagnosefenster (5) und der Abdeckhauben (7) auch der Führung der Spannseile (10) dienen.

7. Förderbandanlage (1) nach Anspruch 1, **dadurch gekennzeichnet, dass** die Abdeckhauben (7) so geformt oder flexibel ausgebildet sind, dass sie auf andere Abdeckhauben (7) gestapelt werden können.

8. Förderbandanlage (1) nach Anspruch 2, **dadurch gekennzeichnet, dass** das Diagnosefenster (4,5) eine von einem Fensterrahmen aufgenommene Folie aufweist.

9. Förderbandanlage (1) nach Anspruch 1, **dadurch gekennzeichnet, dass** beidseitig der Förderbandanlage (1) Diagnosefenster (4, 5) angeordnet sind und die Diagnosefenster (4, 5) in einer Höhe montiert sind, die im Wesentlichen der Montagehöhe der Rollen (2, 3) entspricht.

10. Förderbandanlage (1) nach Anspruch 1, **dadurch gekennzeichnet, dass** die Diagnosefenster (4, 5) von einer Diagnoseeinheit in einem Diagnoseverfahren öffenbare Verrieglungselemente aufweist.

11. System zum Überwachen von Rollen (2, 3) in einer Förderbandanlage (1) mit einer Einhausung der Förderbandanlage (1), **gekennzeichnet durch** eine Förderbandanlage (1) nach wenigstens einem der Ansprüche 1-10, wobei das System weiter eine Diagnoseeinheit mit ein Messgerät zur Erkennung defekter Rollen aufweist und die Diagnoseeinheit zur Überprüfung der Rollen entweder die Diagnosefenster nach einer Entriegelung von Verrieglungselementen öffnen kann oder die Diagnoseeinheit die Rollen durch die geschlossenen Diagnosefenster hindurch überprüfen kann.

## Claims

1. A conveyor belt system (1) with a circulating conveyor belt, in which a loadable conveyor belt segment is supported on upper rolls (2) and an unloaded conveyor belt segment is supported on lower rolls (3), and with an enclosure extending along the longitudinal axis of the conveyor belt system (1),
**characterized in that**
the enclosure features diagnostic windows (4, 5) on at least one side of the conveyor belt, such that the diagnostic windows (4, 5) are arranged at the level of the rolls (2, 3) of the conveyor belt and are designed for optical and/or acoustic monitoring of bearings of the rolls (2, 3), the diagnostic windows being either transparent to a diagnostic signal or easily openable, and itself the diagnostic windows (4, 5) extending along a row, and **in that** the enclosure features lower diagnostic windows (4), upper diagnostic windows (5) and covering hoods (7), the lower diagnostic windows (4) being arranged laterally next to the lower rolls (3), the upper diagnostic windows (5) being arranged laterally next to the upper rolls (2), and the covering hoods (7) being arranged on the upper diagnostic windows (5).

2. A conveyor belt system (1) according to Claim 1, **characterized in that** the diagnostic windows (4, 5) are designed for optical and/or acoustic monitoring of the rolls (2, 3) and of their bearings when the enclosure is closed.

3. A conveyor belt system according to Claim 1, **characterized in that** the diagnostic window respectively features a grid element (6) mounted in a window frame, such that the grid element is acoustically transmittive and/or features sufficiently large apertures for performing a temperature measurement of the rolls (2, 3) through the grid element (6) by means of an infrared thermometer or with a thermal imaging camera.

4. A conveyor belt system (1) according to Claim 4, **characterized in that** the upper diagnostic windows (5) have a length corresponding to the distance of upper roller brackets (8) of the conveyor belt system and the lower diagnostic windows (4) have a length corresponding to the distance of the supports (9) of the conveyor belt system (1).

5. A conveyor belt system (1) according to Claim 5, **characterized in that** the upper diagnostic windows (5) are designed to support the covering hoods (7), such that the covering hoods (7) may have a shorter length than the upper diagnostic windows (5).

6. A conveyor belt system (1) according to Claim 6, **characterized in that** the upper diagnostic windows (5) lean against the upper roller brackets (8), the covering hoods (7) are positioned on the upper diagnostic windows (5), and the upper diagnostic windows (5) and the covering hoods (7) are connected to the upper roller brackets (8) by means of tensioning ropes (10), such that the handles (11) of the upper diagnostic windows (5) and of the covering hoods (7) also serve for guiding the tensioning ropes (10).

7. A conveyor belt system (1) according to Claim 1, **characterized in that** the covering hoods (7) are formed or flexibly designed such that they can be stacked on other covering hoods (7).

8. A conveyor belt system (1) according to Claim 2, **characterized in that** the diagnostic window (4, 5) features a foil mounted in a window frame.

9. A conveyor belt system (1) according to Claim 1, **characterized in that** diagnostic windows (4, 5) are arranged on both sides of the conveyor belt system (1) and **in that** the diagnostic windows (4, 5) are mounted at a level essentially corresponding to the mounting height of the rolls (2, 3).

10. A conveyor belt system (1) according to Claim 1, **characterized in that** the diagnostic windows (4, 5) feature locking elements that can be opened by a diagnostic unit in the course of a diagnostic procedure.

11. A system for the monitoring of rolls (2, 3) in a conveyor belt system (1) with an enclosure of the conveyor belt system (1), **characterized by** comprising a conveyor belt system (1) according to at least one of the Claims 1 through 10, in which the system further comprises a diagnostic unit with a measuring instrument for detecting defective rolls, and the diagnostic unit for the monitoring of the rolls is either capable of opening the diagnostic windows after unlocking the locking elements, or the diagnostic unit is capable of monitoring the rolls through the closed diagnostic windows.

## Revendications

1. Installation de bande transporteuse (1) comprenant une bande transporteuse circulante, une section de bande transporteuse chargeable reposant sur des rouleaux supérieurs (2) et une section de bande transporteuse non chargée reposant sur des rouleaux inférieurs (3), et comprenant une enceinte s'entendant le long de l'axe longitudinal de l'installation de bande transporteuse (1), **caractérisée en ce que** l'enceinte présente au moins sur un côté de la bande transporteuse des fenêtres de diagnostic (4, 5), les fenêtres de diagnostic (4, 5) étant disposées à la hauteur des rouleaux (2, 3) de la bande transporteuse et conçues pour un contrôle optique et/ou acoustique de paliers des rouleaux (2, 3) en ce sens que les fenêtres de diagnostic sont soit transparentes soit légèrement ouvertes pour un signal de diagnostic et en ce sens que les fenêtres de diagnostic (4, 5) s'étendent le long d'une rangée, **et en ce que** l'enceinte présente des fenêtres de diagnostic inférieures (4), des fenêtres de diagnostic supérieures (5) et des couvercles (7), les fenêtres de diagnostic inférieures (4) étant disposées latéralement à côté des rouleaux inférieurs (3), les fenêtres de diagnostic supérieures (5) étant disposées latéralement à côté des rouleaux supérieurs (2) et les couvercles (7) étant disposés sur les fenêtres de diagnostic supérieures (5).

2. Installation de bande transporteuse (1) selon la revendication 1, **caractérisée en ce que** les fenêtres de diagnostic (4, 5) sont conçues pour un contrôle optique et/ou acoustique des rouleaux (2, 3) et de leurs paliers lorsque l'enceinte est fermée.

3. Installation de bande transporteuse selon la revendication 1, **caractérisée en ce que** la fenêtre de diagnostic présente respectivement un élément de grille (6) tendu dans un cadre de fenêtre, l'élément de grille étant perméable au son et/ou présentant des ouvertures suffisamment grandes pour qu'une mesure de température sur les rouleaux (2, 3) puisse être effectuée à travers l'élément de grille (6) au moyen d'un thermomètre infrarouge ou d'une caméra thermique.

4. Installation de bande transporteuse (1) selon la revendication 1, **caractérisée en ce que** les fenêtres de diagnostic supérieures (5) ont une longueur qui correspond à la distance par rapport à des stations à rouleaux porteurs supérieurs (8) de l'installation de bande transporteuse, et les fenêtres de diagnostic inférieures (4) ont une longueur qui correspond à la distance par rapport aux supports (9) de l'installation de bande transporteuse (1).

5. Installation de bande transporteuse (1) selon la revendication 4, **caractérisée en ce que** les fenêtres de diagnostic supérieures (5) sont conçues pour supporter les couvercles (7), les couvercles (7) pouvant avoir une longueur inférieure à celle des fenêtres de diagnostic supérieures (5).

6. Installation de bande transporteuse (1) selon la revendication 5, **caractérisée en ce que** les fenêtres de diagnostic supérieures (5) sont en appui sur les stations à rouleaux porteurs supérieurs (8), les couvercles (7) sont placés sur les fenêtres de diagnostic supérieures (5), et les fenêtres de diagnostic supérieures (5) et les couvercles (7) sont serrés aux stations à rouleaux porteurs supérieurs (8) au moyen de câbles de tension (10), des poignées (11) des fenêtres de diagnostic supérieures (5) et des couvercles (7) servant également au guidage des câbles de tension (10).

7. Installation de bande transporteuse (1) selon la revendication 1, **caractérisée en ce que** les couvercles (7) sont formés ou conçus flexibles de telle sorte qu'ils peuvent être empilés sur d'autres couvercles (7).

8. Installation de bande transporteuse (1) selon la revendication 2, **caractérisée en ce que** la fenêtre de diagnostic (4, 5) présente un film logé dans un cadre de fenêtre.

9. Installation de bande transporteuse (1) selon la revendication 1, **caractérisée en ce que** des fenêtres de diagnostic (4, 5) sont disposées des deux côtés de l'installation de bande transporteuse (1) et les fenêtres de diagnostic (4, 5) sont montées à une hauteur qui correspond sensiblement à la hauteur de montage des rouleaux (2, 3).

10. Installation de bande transporteuse (1) selon la revendication 1, **caractérisée en ce que** la fenêtre de diagnostic (4, 5) d'une unité de diagnostic présente des éléments de verrouillage pouvant être ouverts lors d'un procédé de diagnostic.

11. Système de surveillance de rouleaux (2, 3) dans une installation de bande transporteuse (1) comprenant une enceinte de l'installation de bande transporteuse (1), **caractérisé par** une installation de bande transporteuse (1) selon au moins l'une des revendications 1 à 10, le système présentant en outre une unité de diagnostic comprenant un appareil de mesure pour la détection de rouleaux défectueux et l'unité de diagnostic pouvant, pour le contrôle des rouleaux, ouvrir les fenêtres de diagnostic après le déverrouillage d'éléments de verrouillage, ou l'unité de diagnostic pouvant contrôler les rouleaux à travers les fenêtres de diagnostic fermées.
